# EUROPÄISCHE PATENTSCHRIFT

(11) **EP 1 378 763 B1**
(45) Veröffentlichungstag und Bekanntmachung des Hinweises auf die Patenterteilung: **29.04.2009**
(21) Anmeldenummer: 03013276.5
(22) Anmeldetag: 12.06.2003
(51) Int. Cl.: G01S 7/497, G01S 7/481, G01S 17/02

(54) **Laserabtastvorrichtung mit Funktionsüberwachung**
Laser scanning apparatus with function monitoring
Appareil de balayage laser avec surveillance de fonctions

(30) Priorität: 05.07.2002 DE 10230397
(43) Veröffentlichungstag der Anmeldung: 07.01.2004
(73) Patentinhaber: SICK AG, 79183 Waldkirch (DE)
(72) Erfinder: Dollmann, Thomas, 79197 Winden (DE); Mack, Stefan, Dr., 79106 Freiburg (DE)
(74) Vertreter: Manitz, Finsterwald & Partner GbR

(56) Entgegenhaltungen:
- DE-A- 19 652 441
- DE-A- 19 800 968
- DE-C- 10 025 511
- DE-C- 19 732 776

## Beschreibung

Die Erfindung betrifft eine Laserabtastvorrichtung, insbesondere zur Abstandsermittlung, mit einer Sendeeinheit, die einen Impulslaser zum Aussenden eines Lichtstrahls in einen zu überwachenden Bereich aufweist, mit einer Lichtablenkeinheit, um den von dem Impulslaser ausgesandten Lichtstrahl in den zu überwachenden Bereich zu lenken, mit einer Empfangseinheit zum Empfangen von Lichtimpulsen, die von einem im zu überwachenden Bereich befindlichen Gegenstand reflektiert werden, und mit einer für den Lichtstrahl durchlässigen Frontscheibe, welche die Sende-, Empfangs- und Lichtablenkeinheit von der Umgebung der Laserabtastvorrichtung trennt.

Derartige Laserabtastvorrichtungen sind aus der DE 100 25 511 C1, DE 198 00 968 A1, DE 197 32 776 C1 oder DE 196 52 441 A1 grundsätzlich bekannt.

Laserabtastvorrichtungen der eingangs genannten Art werden beispielsweise zur Abstandsermittlung in Kraftfahrzeugen eingesetzt. Dabei wird die Zeit zwischen dem Aussenden eines Lichtimpulses und dem Empfangen des entsprechend reflektierten Lichtimpulses gemessen, und aus der Lichtgeschwindigkeit und Laufzeit des empfangenen Lichtimpulses der Abstand zwischen der Laserabtastvorrichtung, d.h. dem Kraftfahrzeug, und dem Gegenstand ermittelt, an dem der Lichtimpuls reflektiert wurde. Zusätzlich können derartige Laserabtastvorrichtungen mit einer, bspw. rotierenden, Lichtumlenkanordnung versehen sein, um die Richtung, in der die Lichtimpulse abgestrahlt werden, innerhalb vorgegebener Winkelbereiche zu verändern. Auf diese Weise lässt sich die Umgebung der Laserabtastvorrichtung innerhalb der vorgegebenen Bereiche entsprechend abtasten. Aus der Richtung, in die der Lichtimpuls ausgestrahlt wurde, und dem Abstand lässt sich folglich die Relativposition des Gegenstandes zur Laserabtastvorrichtung ermitteln.

Um ein zuverlässiges Arbeiten der Laserabtastvorrichtung zu gewährleisten, wird die Lichtdurchlässigkeit und somit der Verschmutzungsgrad der Frontscheibe überwacht, um eine gleich bleibende Transmission und somit eine korrekte Reichweite sicherzustellen. Hierfür sind üblicherweise mehrere Lichtquellen, typischerweise Leuchtdioden, und entsprechende Lichtdetektoren derart angeordnet, dass das von den Lichtquellen ausgesandte Licht auf dem Weg zu dem jeweiligen Lichtdetektor wenigstens einmal die Frontscheibe durchquert. Anhand der Intensität des von dem Lichtdetektor detektierten Lichts lassen sich Ablagerungen auf der Frontscheibe feststellen, welche die Transmission der Frontscheibe verschlechtern bzw. verändern.

Außerdem wird in regelmäßigen zeitlichen Abständen die Funktion der Sende- und Empfangseinheit überprüft. In Laserabtastvorrichtungen, die einen Winkelbereich von weniger als 360° überwachen, wird der von der Sendeeinheit ausgesandte Lichtstrahl zu diesem Zweck auf ein Referenzziel gelenkt, das auf einer von der Frontscheibe abgewandten Seite der Ablenkeinrichtung, d.h. in einem toten Winkelbereich, gelegen ist und den Lichtstrahl auf die Empfangseinheit zurück reflektiert.

Bei einer Verschmutzung der Frontscheibe bzw. einer Störung der Sendeund/oder Empfangseinheit kann ein Warnsignal ausgelöst werden.

Der Erfindung liegt die Aufgabe zugrunde, eine Laserabtastvorrichtung, insbesondere für einen zu überwachenden Winkelbereich von 360°, mit erhöhter Zuverlässigkeit und Sicherheit bei vereinfachter Bauweise zu schaffen.

Zur Lösung der Aufgabe ist eine Laserabtastvorrichtung mit den Merkmalen des Anspruchs 1 vorgesehen.

Die erfindungsgemäße Laserabtastvorrichtung umfasst eine Sendeeinheit, die einen Impulslaser zum Aussenden eines Lichtstrahls in einen zu überwachenden Bereich aufweist, eine Lichtablenkeinheit, um den von dem Impulslaser ausgesandten Lichtstrahl in den zu überwachenden Bereich zu lenken, eine Empfangseinheit zum Empfangen von Lichtimpulsen, die von einem im zu überwachenden Bereich befindlichen Gegenstand reflektiert werden, und eine für den Lichtstrahl durchlässige Frontscheibe, welche die Sende-, Empfangs- und Lichtablenkeinheit von der Umgebung der Laserabtastvorrichtung trennt. Dabei ist erfindungsgemäß zumindest ein einen Teilstrahl von dem ausgesandten Lichtstrahl abzweigendes und den Lichtstrahl für eine Messung der Transmission der Frontscheibe zu einem Photodetektor lenkendes optisches Element vorgesehen.

Indem erfindungsgemäß ein Teilstrahl aus dem ausgesandten Lichtstrahl abgezweigt und durch die Frontscheibe gelenkt wird, wird ein und dieselbe Lichtquelle, nämlich der Impulslaser der Sendeeinheit, gleichzeitig zur Abstandsmessung und zur Messung der Transmission der Frontscheibe verwendet. Der Impulslaser der Sendeeinheit erfüllt also gleichzeitig zwei Funktionen. Auf die für eine flächendeckende Überwachung der Frontscheibentransmission erforderliche große Anzahl von zusätzlichen Lichtquellen und die damit verbundene elektrische Anbindung der Lichtquellen kann erfindungsgemäß also verzichtet werden, so dass eine vereinfachte Bauweise der erfindungsgemäßen Laserabtastvorrichtung erreicht wird.

Zusätzlich oder alternativ kann der abgezweigte Teilstrahl auch für eine Referenzzielmessung, d.h. zur Überprüfung der Funktion von Sende- und Empfangseinheit genutzt werden. Mit der zusätzlichen Referenzzielmessung erfüllt der Impulslaser neben der Abstandsmessung und der Messung der Frontscheibentransmission insgesamt drei Funktionen, wodurch die Bauweise der erfindungsgemäßen Laserabtastvorrichtung noch weiter vereinfacht wird.

Erfindungsgemäß ist das optische Element mit der Frontscheibe gekoppelt. Dadurch wird der abgezweigte Teilstrahl besonders effektiv in die Frontscheibe eingekoppelt, so dass eine unerwünschte Reflexion des Teilstrahls an der Frontscheibe weitgehend ausgeschlossen werden kann.

Vorteilhafte Ausführungsformen der Erfindung sind den Unteransprüchen, der Beschreibung und der Zeichnung zu entnehmen.

Das optische Element kann ein separates, an der Frontscheibe, insbesondere an deren Innenseite, befestigtes Bauteil sein. In diesem Fall lässt es sich auch nach bereits erfolgter Montage der Frontscheibe noch an dieser anbringen. Wenn das optische Bauelement an der Innenseite der Frontscheibe angebracht ist, ist es außerdem vor äußeren Einflüssen und insbesondere vor Verschmutzung geschützt.

Vorzugsweise ist das optische Element in die Frontscheibe integriert. Das optische Element kann somit gleichzeitig zusammen mit der Frontscheibe ausgebildet werden, wodurch sich die Herstellung der Laserabtastvorrichtung vereinfacht.

Vorteilhafterweise ist zumindest ein Photodetektor zur Messung der Intensität des empfangenen Teilstrahls auf der von der Sende-, Empfangs- und Lichtablenkeinheit entgegengesetzten Seite der Frontscheibe gelegen. Auf diese Weise wird sichergestellt, dass der Teilstrahl wenigstens einmal die Frontscheibe durchläuft, was eine Bestimmung der Frontscheibentransmission ermöglicht.

Der zumindest eine Photodetektor zur Messung der Intensität des empfangenen Teilstrahls und die Lichtablenkeinheit können auch auf der gleichen Seite der Frontscheibe gelegen sein, wobei die Frontscheibe derart ausgebildet ist, dass der Teilstrahl die Frontscheibe wenigstens zweimal durchquert. In diesem Fall ist auch der Photodetektor durch die Frontscheibe vor äußeren Einflüssen und insbesondere vor Verschmutzung geschützt.

Vorzugsweise ist der Photodetektor oberhalb oder unterhalb der Frontscheibe gelegen. Dies verhindert eine Beeinträchtigung der Ausbreitung des ausgesandten Lichtstrahls und somit der Abstandsermittlung.

Gemäß einer besonders bevorzugten Ausführungsform der erfindungsgemäßen Laserabtastvorrichtung ist zumindest ein Reflektorelement auf der von der Sende-, Empfangs- und Lichtablenkeinheit entgegengesetzten Seite der Frontscheibe gelegen, durch das zumindest ein Teil des Teilstrahls über das optische Element und die Lichtablenkeinheit in die Empfangseinheit reflektierbar ist. Das Reflektorelement ermöglicht einerseits die Überprüfung der Funktion von Sendeeinheit bzw. Empfangseinheit (Referenzzielmessung) und andererseits die Ermittlung der Frontscheibentransmission, indem es den abgezweigten Teilstrahl durch die Frontscheibe hindurch zurück auf die Empfangseinheit reflektiert. In der Empfangseinheit bzw. einer entsprechenden Auswerteeinheit lässt sich dann zum einen feststellen, ob überhaupt ein Lichtstrahl ausgesandt bzw. ein Teilstrahl abgezweigt wurde und/oder von der Empfangseinheit empfangen wurde. Zum anderen lässt sich gleichzeitig die Intensität des von dem Reflektorelement reflektierten Teilstrahls bestimmen, wobei der Teilstrahl die Frontscheibe wenigstens zweimal durchlaufen hat und seine Intensität bei einer entsprechenden Verschmutzung der Frontscheibe doppelt geschwächt ist, so dass sich auch leichte Veränderungen in der Transmission der Frontscheibe zuverlässig detektieren lassen.

In diesem Fall erfüllt der Impulslaser der Sendeeinheit also gleich drei Funktionen: Erstens sendet er einen Lichtstrahl zur Abstandsmessung aus, zweitens wird ein Teilstrahl abgezweigt und zur Überprüfung der Funktion der Sende- und Empfangseinheit auf ein Reflektorelement gelenkt, und drittens wird der abgezweigte Teilstrahl zur Bestimmung der Frontscheibentransmission verwendet.

Bei der Nutzung des am Reflektorelement reflektierten Teilstrahls zur Bestimmung der Frontscheibentransmission und der Detektion bzw. Auswertung des reflektierten Teilstrahls in der Empfangseinheit kann auf zusätzliche separate Lichtdetektoren verzichtet werden, die in vergleichsweise großer Zahl entlang der Frontscheibe vorgesehen werden müssten, um deren Transmission flächendeckend überwachen zu können. Auf eine zusätzliche Anordnung zur Referenzzielmessung und zusätzliche Lichtquellen kann folglich verzichtet werden. Die Bauweise der erfindungsgemäßen Laserabtastvorrichtung wird dadurch weiter vereinfacht.

Das Reflektorelement und die Lichtablenkeinheit können auch auf der gleichen Seite der Frontscheibe gelegen sein, wobei die Frontscheibe derart ausgebildet ist, dass der Teilstrahl die Frontscheibe wenigstens zweimal durchquert. In diesem Fall ist auch das Reflektorelement durch die Frontscheibe vor äußeren Einflüssen und insbesondere vor Verschmutzung geschützt.

Besonders vorteilhaft ist es, wenn das Reflektorelement oberhalb oder unterhalb der Frontscheibe gelegen ist. Auf diese Weise wird eine Beeinträchtigung der Ausbreitung des zur Abstandsermittlung ausgesandten Lichtstrahls verhindert.

Gemäß einer weiteren Ausbildung der Erfindung ist die Lichtablenkeinheit derart ausgebildet, dass ein Referenzstrahl von dem ausgesandten Lichtstrahl abzweigbar und in Richtung eines Referenzziels lenkbar ist. Insbesondere wenn durch die Laserabtastvorrichtung eine 360°-Überwachung vorgesehen ist, lässt sich das Referenzziel geeignet, beispielsweise unterhalb der Lichtablenkeinheit, positionieren, um die Ausbreitung des zur Abstandsmessung ausgesandten Lichtstrahls nicht zu beeinträchtigen. Indem der Referenzstrahl durch die Lichtablenkeinheit in Richtung des Referenzziels lenkbar ist, wird die Flexibilität bei der Anordnung des Referenzziels erhöht.

Vorzugsweise ist das Referenzziel derart reflektierend und die Lichtablenkeinheit derart lichtdurchlässig ausgebildet, dass der Referenzstrahl nach Reflexion an einem Referenzziel über die Lichtablenkeinheit in die Empfangseinheit einkoppelbar ist. Dadurch wird die Flexibilität bei der Anordnung des Referenzziels relativ zur Empfangseinheit weiter erhöht.

Vorteilhafterweise ist der Referenzstrahl durch eine Freischaltanordnung derart steuerbar, dass er nur in vorbestimmten Winkelpositionen der Lichtablenkeinheit auf das Referenzziel trifft. Dadurch können die bei der Referenzzielmessung auftretenden Datenmengen reduziert werden.

Gemäß einer weiteren besonders bevorzugten Ausführungsform der erfindungsgemäßen Laserabtastvorrichtung ist die Lichtablenkeinheit um eine, insbesondere vertikale, Achse rotierbar, um mit dem ausgesandten Lichtstrahl, insbesondere in einer horizontalen Ebene, einen Winkelbereich von 360° zu überwachen. Die Rotation der Lichtablenkeinheit um die vertikale Achse stellt eine baulich besonders einfach zu realisierende Möglichkeit dar, eine 360°-Überwachung zu erreichen. Die Sende- und Empfangseinheit brauchen dabei nicht beweglich ausgebildet zu werden, so dass die Anzahl der beweglichen Bauteile reduziert ist.

Der Referenzstrahl kann durch eine Freischaltanordnung derart steuerbar sein, dass er nur in vorbestimmten Winkelpositionen der Lichtablenkeinheit auf das Referenzziel trifft. Auf diese Weise kann die Anzahl der Messpunkte zur Überprüfung der Funktion von Sende- bzw. Empfangseinheit, d.h. die anfallende Datenmenge, reduziert werden.

Weiterer Gegenstand der Erfindung ist außerdem ein Verfahren zum Überwachen einer Frontscheibe einer Laserabtastvorrichtung, insbesondere nach einer der voranstehend genannten Arten, bei dem durch ein mit einer Frontscheibe gekoppeltes optisches Element ein Teilstrahl von einem durch eine, insbesondere einen Impulslaser aufweisende, Sendeeinheit ausgesandten Lichtstrahl abgezweigt und zur Bestimmung der Frontscheibentransmission durch die Frontscheibe gelenkt wird. Durch das erfindungsgemäße Verfahren lassen sich die voranstehend genannten Vorteile der erfindungsgemäßen Laserabtastvorrichtung besonders gut umsetzen.

Nachfolgend wird die vorliegende Erfindung rein beispielhaft anhand vorteilhafter Ausführungsformen und unter Bezugnahme auf die beigefügten Zeichnungen beschrieben. Es zeigen.
- Fig. 1: eine erfindungsgemäße Laserabtastvorrichtung gemäß einer ersten Ausführungsform, bei der ein optisches Element auf einer Frontscheibe angebracht ist;
- Fig. 2: ein optisches Element, das in die Frontscheibe integriert ist;
- Fig. 3: eine erfindungsgemäße Laserabtastvorrichtung gemäß einer zweiten Ausführungsform, bei der unterhalb einer Lichtablenkeinheit ein Referenzziel vorgesehen ist; und
- Fig. 4: eine dritte Ausführungsform der erfindungsgemäßen Laserabtastvorrichtung, bei der ein an einem Reflektorelement reflektierter Teilstrahl sowohl zur Bestimmung der Frontscheibentransmission als auch für eine Referenzzielmessung verwendet wird.

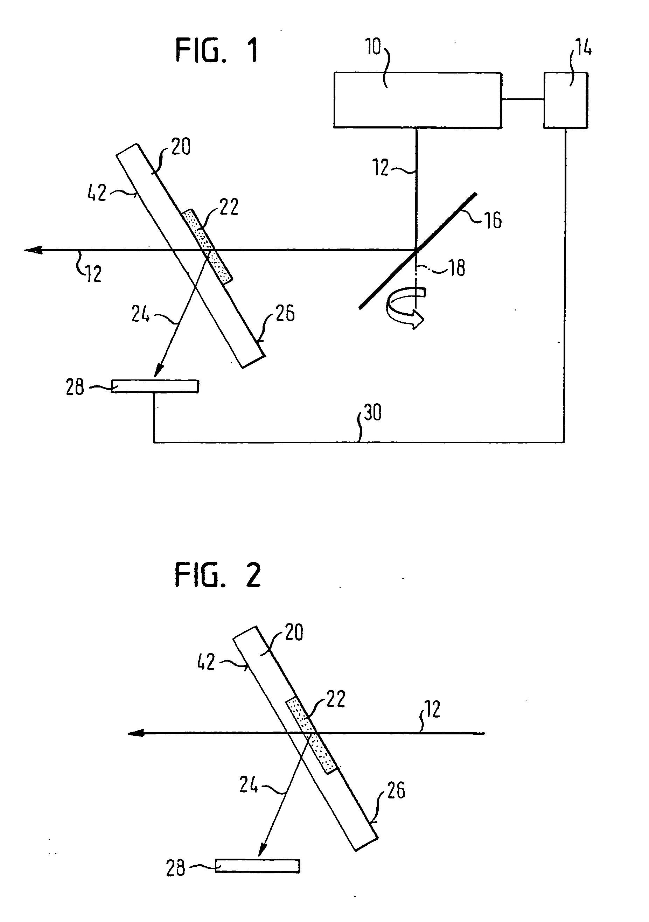

In Fig. 1 ist schematisch eine erste Ausführungsform der erfindungsgemäßen Laserabtastvorrichtung dargestellt. Die Laserabtastvorrichtung weist eine kombinierte Sende-/Empfangseinheit 10 auf, die einen Impulslaser zum Abstrahlen eines gepulsten Laserlichtstrahls, beispielsweise im Infrarot-Wellenlängenbereich, und einen entsprechend an das Laserlicht angepassten Photodetektor zum Empfangen eines ggf. an einem im zu überwachenden Bereich befindlichen Gegenstand reflektierten Laserlichtimpulses umfasst. Obwohl der Impulslaser und der Photodetektor bei dem dargestellten Ausführungsbeispiel in einer Einheit 10 zusammengefasst sind, ist es grundsätzlich auch möglich, diese in voneinander getrennten Sende- bzw. Empfangseinheiten vorzusehen.

Das Prinzip der Abstandsmessung funktioniert folgendermaßen: Der Impulslaser sendet einen gepulsten Lichtstrahl bzw. einen Lichtimpuls 12 aus, der die Laserabtastvorrichtung auf einem Weg verlässt, der weiter unten beschrieben wird. Trifft der Lichtstrahl 12 auf einen im zu überwachenden Raum befindlichen Gegenstand, so wird er an diesem reflektiert und von dem Photodetektor der Sendeempfangseinheit 10 detektiert. In einer Auswerteeinheit 14 wird unter Berücksichtigung der Lichtgeschwindigkeit aus der Laufzeit des empfangenen Lichtimpulses die Entfernung des Gegenstandes ermittelt, an dem der Lichtpuls reflektiert wurde.

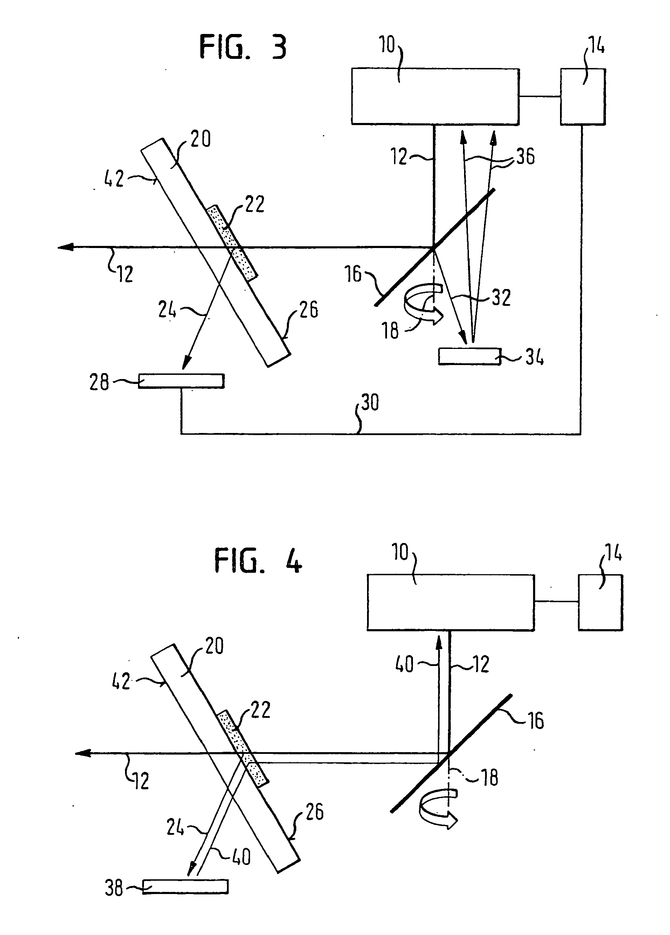

Die Auswerteeinheit 14 ist in Fig. 1 als eine von der Sende-/Empfangseinheit 10 getrennte Einheit dargestellt. Es ist aber ebenso gut möglich, die Auswerteeinheit 14 mit in die Sende-/Empfangseinheit 10 zu integrieren (gleiches gilt auch für die in Fig. 3 und Fig. 4 dargestellten Ausführungsformen) .

Der Lichtstrahl 12 wird in im Wesentlichen vertikaler Richtung von dem Impulslaser der Sende-/Empfangseinheit ausgestrahlt und trifft auf eine Lichtablenkeinheit 16, durch die der Lichtstrahl 12 ungefähr rechtwinkelig in eine im Wesentlichen horizontale Richtung umgelenkt wird. Bei der in Fig. 1 dargestellten Ausführungsform ist die Ablenkeinheit 16 durch einen für das Laserlicht nicht-durchlässigen Planspiegel gebildet. Die Lichtablenkeinheit 16 ist um eine vertikale Achse 18 drehbar gelagert und wird mit Hilfe eines nicht gezeigten Antriebsmotors rotiert, wobei die Umdrehungszahlen im Bereich von einigen bis mehreren Tausend Umdrehungen pro Minute liegen kann. Durch die Rotation der Ablenkeinheit 16 wird erreicht, dass der von dem Impulslaser ausgesandte Lichtstrahl 12 einen Winkelbereich von 360° in einer zur Rotationsachse 18 senkrechten Ebene, d.h. in einer im Wesentlichen horizontalen Ebene, überstreicht.

Es ist auch möglich, dass der Lichtstrahl 12 von der Lichtablenkeinheit 16 in einem anderen als einem rechten Winkel abgelenkt wird, so dass der Lichtstrahl 12 bei einer Rotation um die Achse 18 eine Kegelmantelfläche beschreibt, oder dass die Rotationsachse 18 nicht vertikal orientiert, sondern relativ zu der vertikalen Orientierung verkippt ist.

Zum Schutz der Sende-/Empfangseinheit 10, der Auswerteeinheit 14, der Ablenkeinheit 16 und anderer, nicht gezeigter Bauteile der Laserabtastvorrichtung vor äußeren Einflüssen sind diese in einem nicht gezeigten Gehäuse untergebracht. Damit der von dem Impulslaser ausgesandte Lichtstrahl 12 aus der Laserabtastvorrichtung austreten kann, weist das Gehäuse eine Frontscheibe 20 auf, die aus einem für das Laserlicht durchlässigen Material, beispielsweise Glas, gebildet ist. Um eine 360°-Überwachung zu ermöglichen, ist die Frontscheibe 20 ringförmig ausgebildet, d.h. sie umgibt die Lichtablenkeinheit 16 zumindest in dem Bereich der Ebene, in welcher der durch die Ablenkeinheit 16 umgelenkte Lichtstrahl 12 rotiert. Damit der Lichtstrahl 12 in jeder Winkelposition durch die Frontscheibe 20 hindurchtreten kann, schneidet die durch den rotierenden Lichtstrahl 12 gebildete Ebene die Frontscheibe 12 ungefähr in einem mittleren Bereich.

In dem Bereich der Frontscheibe 20, in dem der Lichtstrahl 12 durch die Frontscheibe 20 hindurchtritt, ist ein optisches Element 22 vorgesehen, um einen Teilstrahl 24, d.h. einen geringen Intensitäts- und/oder Querschnittsanteil von dem aus der Laserabtastvorrichtung austretenden Lichtstrahl 12 abzuzweigen. Wie in Fig. 1 dargestellt ist, ist das optische Element 22 auf einer Innenseite 26 der Frontscheibe 20, d.h. auf der zur Ablenkeinheit 16 weisenden Seite der Frontscheibe 20, angeordnet. Das optische Element 22 wirkt vorzugsweise diffraktiv und ist vorzugsweise als optisches Gitter ausgebildet. Es kann beispielsweise aus einer geeignet strukturierten Folie gebildet sein, die auf die Innenseite 26 der Frontscheibe 20 aufgeklebt ist.

Wie in Fig. 2 gezeigt ist, kann das optische Element 22 auch direkt in die Frontscheibe 20 integriert sein. Beispielsweise kann eine geeignete Gitterstruktur bereits bei der Herstellung der Frontscheibe 20 in diese eingebracht werden, z.B. durch Prägen, Lasern, Sägen oder Ätzen.

Wie in Fig. 1 dargestellt ist, durchläuft der Teilstrahl 24 die Frontscheibe 20 und trifft bei bestimmten Rotationswinkelpositionen der Lichtablenkeinheit 16 auf einen Photodetektor 28. Mit Hilfe des Photodetektors 28 ist die Intensität des abgezweigten Teilstrahls 24 messbar. Die Intensität des auf den Photodetektor 28 auftreffenden Teilstrahls 24 ist von der Transmission der Frontscheibe 20 abhängig, d.h. bei einer reduzierten Transmission der Frontscheibe 20 misst der Photodetektor 28 eine reduzierte Intensität des Teilstrahls 24. Da die Transmission der Frontscheibe 20 durch eine Verschmutzung der Frontscheibe 20 beeinträchtigt wird, lässt sich bei einer reduzierten Intensität des Teilstrahls 24 auf einen erhöhten Verschmutzungsgrad der Frontscheibe 20 zurückschließen.

Um eine möglichst hohe Ortsauflösung bei der Messung der Transmission der Frontscheibe 20 zu erreichen, d.h. um die Frontscheibentransmission möglichst flächendeckend zu überwachen, sind mehrere Photodetektoren 28 entlang des Umfangs der Frontscheibe 20 angeordnet. Dabei gilt, dass die Ortsauflösung der Transmissionsmessung umso genauer ist, je geringer der Abstand zwischen zwei benachbarten Photodetektoren 28 ist, d.h. je mehr Photodetektoren 28 verwendet werden.

Damit die Photodetektoren 28 nicht den Strahlengang des aus der Laserabtastvorrichtung austretenden Lichtstrahls 12 behindern, sind diese unterhalb der Frontscheibe 20 angeordnet. Selbstverständlich können sie aber ebenso gut oberhalb der Frontscheibe 20 angeordnet sein.

Über eine Leitung 30 ist jeder Photodetektor 28 mit der Auswerteeinheit 14 verbunden. Über diese Leitung 30 wird ein der gemessenen Intensität des Teilstrahls 24 entsprechendes Signal an die Auswerteeinheit 14 übermittelt, um in dieser weiterverarbeitet zu werden. Die Auswerteeinheit 14 löst ein entsprechendes Warnsignal aus, sobald die Verschmutzung der Frontscheibe 20 zumindest bereichsweise einen vorbestimmten Schwellwert überschreitet.

In Fig. 3 ist eine zweite Ausführungsform der erfindungsgemäßen Laserabtastvorrichtung dargestellt, die sich von der in Fig. 1 dargestellten ersten Ausführungsform darin unterscheidet, dass zusätzlich eine Referenzzielmessung vorgesehen ist. Die Referenzzielmessung dient insbesondere einer Überprüfung der Funktion der Sende-/Empfangseinheit 10, d.h. des Impulslasers und des Photodetektors der Sende-/Empfangseinheit 10.

Für die Referenzzielmessung wird aus dem von dem Impulslaser der Sende-/Empfangseinheit 10 ausgesandten Lichtstrahl 12 ein Referenzstrahl 32 abgezweigt. Zu diesem Zweck ist die Lichtablenkeinheit 16 als ein für das Laserlicht halbdurchlässiger Planspiegel ausgebildet, d.h. ein kleiner Intensitäts- oder Strahlquerschnittsanteil des von dem Impulslaser der Sende-/Empfangseinheit 10 ausgesandten Lichtstrahls 12 wird als Referenzstrahl 32 durch die Ablenkeinheit 16 transmittiert und nicht in Richtung der Frontscheibe 20 umgelenkt.

Der abgezweigte Referenzstrahl 32 wird stattdessen vorzugsweise schräg zur Rotationsachse 18 auf ein Referenzziel 34 gelenkt, das unterhalb der Ablenkeinheit 16 und zur Rotationsachse 18 beabstandet angeordnet ist, und wird von diesem reflektiert. Die reflektierten Referenzstrahlen 36 treten von unten wieder durch die Ablenkeinheit 16 hindurch und treffen auf die Sende-/ Empfangseinheit 10, in der sie von dem Photodetektor der Sende- / Empfangseinheit 10 detektiert werden. Sobald von dem Photodetektor der Sende- / Empfangseinheit 10 unerwarteterweise kein reflektierter Referenzstrahl 36 detektiert wird, bedeutet dies, dass der Impulslaser und/oder der Photodetektor der Sende-/Empfangseinheit 10 defekt ist bzw. sind oder der Lichtweg des reflektierten Referenzstrahls 36 auf sonstige Weise gestört ist, beispielsweise durch einen Defekt der Lichtablenkeinheit 16.

Bei einer Rotation der Ablenkeinheit 16 beschreibt der abgezweigte Referenzstrahl 32 in einer zur Rotationsachse senkrechten Ebene eine Kreisbahn. Weist das Referenzziel 34 eine kreis- oder ringförmige Gestalt auf, in der die Kreisbahn des Referenzstrahls 32 verläuft, so ist eine quasi kontinuierliche Referenzzielmessung möglich, da von jedem ausgesandten Lichtimpuls 12 ein Referenzlichtimpuls 32 abgezweigt und im Normalfall von dem Referenzziel 34 an den Photodetektor der Sende-/ Empfangseinheit 10 zurückreflektiert wird.

Zur Reduzierung von in der Auswerteeinheit 14 auszuwertenden Datenmengen ist es aber auch möglich, die Referenzzielmessung auf einen vorbestimmten Rotationswinkelbereich der Ablenkeinheit 16 zu beschränken. Bei einer Referenzzielmessung, die auf einen kleinen Winkelbereich beschränkt ist, ist auch ein Referenzziel mit einer kleinen Fläche ausreichend. Der ausgewählte Winkelbereich kann durch eine nicht gezeigte Freischaltanordnung definiert werden, die den abgezweigten Referenzstrahl 32 nur für bestimmte Winkelpositionen der Lichtablenkeinheit 16 in Richtung des Referenzziels 34 freigibt. Der durch die Ablenkeinheit 16 abgezweigte Referenzstrahl 32 kann beispielsweise durch eine sich mit der Ablenkeinheit 16 mitdrehende optische Anordnung derart abgelenkt werden, dass das Referenzziel 34 nur bei bestimmten Winkelpositionen getroffen wird. Alternativ dazu können auch mit der Lichtablenkeinheit 16 synchronisierte Verschlüsse (Shutter) verwendet werden, welche beispielsweise über Polarisationsfilter oder über zueinander drehbare Gitter-/Blendenstrukturen realisiert werden.

Die in Fig. 4 dargestellte dritte Ausführungsform der erfindungsgemäßen Laserabtastvorrichtung entspricht der in Fig. 1 gezeigten ersten Ausführungsform, wobei der von dem ausgesandten Lichtstrahl 12 abgezweigte Teilstrahl 24 nicht nur zur Messung der Frontscheibentransmission sondern gleichzeitig auch zur Referenzzielmessung verwendet wird.

Zu diesem Zweck trifft der von dem Lichtstrahl 12 abgezweigte und durch die Frontscheibe 20 transmittierte Teilstrahl 24 nicht auf einen Photodetektor 28, wie er in Fig. 1 dargestellt ist, sondern auf ein Reflektorelement 38, das auf der von der Lichtablenkeinheit 16 abgewandten Außenseite 42 der Frontscheibe 20, d.h. außerhalb der Laserabtastvorrichtung, angeordnet ist. Außerdem ist das Reflektorelement 38, wie in Fig. 4 gezeigt ist, unterhalb der Frontscheibe 20 angeordnet, um die Ausbreitung des ausgesandten Lichtstrahls 12 in den zu überwachenden Raum nicht zu behindern. Selbstverständlich kann das Reflektorelement 38 ebenso gut oberhalb der Frontscheibe 20 angeordnet sein.

Der von dem Lichtstrahl 12 abgezweigte Teilstrahl 24 wird von dem Reflektorelement 38 reflektiert und tritt als reflektierter Teilstrahl 40 abermals in die Frontscheibe 20 ein. Von der Frontscheibe 20 transmittiert und von dem optischen Element 22 umgelenkt verläuft der reflektierte Teilstrahl 40 parallel zum horizontalen Abschnitt des ausgesandten Lichtstrahls 12, bis er auf die Lichtablenkeinheit 16 trifft, von der er in Richtung der Sende-/Empfangseinheit 10 umgelenkt wird. Der reflektierte Teilstrahl 40 wird von dem Photodetektor der Sende-/ Empfangseinheit 10 detektiert und analysiert, wobei einerseits festgestellt wird, ob überhaupt ein reflektierter Teilstrahl 40 auf den Detektor auftrifft (Referenzzielmessung), und andererseits die Intensität des reflektierten Teilstrahls 40 bestimmt wird (Messung der Frontscheibentransmission).

Durch das einmalige Abzweigen eines Teilstrahls 24 von dem ausgesandten Lichtstrahl 12 lassen sich neben der Abstandsmessung folglich zwei zusätzliche Messungen gleichzeitig durchführen, nämlich die Überprüfung der Funktion der Sende-/Empfangseinheit 10 einerseits und die Messung der Frontscheibentransmission andererseits.

Dadurch, dass der abgezweigte Teilstrahl 24 zweimal durch die Frontscheibe 20 transmittiert wird, einmal als Teilstrahl 24 und das zweite Mal als reflektierter Teilstrahl 40, wird der Teilstrahl 24, 40 durch gegebenenfalls an der Frontscheibe 20 angelagerte Verschmutzungen zweimal abgeschwächt, d.h. seine Intensität wird doppelt so stark reduziert, als wenn er die Frontscheibe 20 nur ein einziges Mal durchlaufen würde. Dadurch wird die Empfindlichkeit der Messung der Frontscheibentransmission wesentlich erhöht, d.h. es können auch solche Verschmutzungen der Frontscheibe 20 detektiert werden, die bei einem einmaligen Durchgang des Teilstrahls 24 durch die Frontscheibe 20 gerade nicht erkannt worden wären.

Vorzugsweise ist das reflektierende Element 38 retroreflektierend ausgebildet, d.h. der abgezweigte Teilstrahl 24 wird als reflektierter Teilstrahl 40 weitgehend in die Richtung der anleuchtenden Lichtquelle zurück reflektiert, wobei dies nahezu unabhängig davon geschieht, unter welchem Winkel der abgezweigte Teilstrahl 24 auf das Reflektorelement 38 auftrifft. Das Reflektorelement 38 kann beispielsweise durch eine retroreflektierende Folie gebildet sein.

Um eine möglichst flächendeckende Überwachung der Transmission der Frontscheibe 20 zu ermöglichen, kann sich das reflektierende Element 38 durchgehend entlang der von der Ablenkeinheit 16 wegweisenden Außenseite 42 der Frontscheibe 20 erstrecken. Das reflektierende Element 38 kann aber auch in zueinander beabstandeten Abschnitten entlang der Außenseite 42 der Frontscheibe 20 verlaufen.

Bei einer nicht gezeigten Abwandlung der dargestellten Ausführungsformen kann die Frontscheibe 20 auch derart winkelig ausgebildet sein, dass der abgezweigte Teilstrahl 24 die Frontscheibe 20 zwei- oder mehrmals durchläuft, bevor er auf den Photodetektor 28 bzw. das Reflektorelement 38 trifft. In diesem Fall können der Photodetektor 28 bzw. das Reflektorelement 38 und die Lichtablenkeinheit 16 auf der gleichen Seite der Frontscheibe 20 gelegen sein, d.h. also im Inneren der Laserabtastvorrichtung, so dass auch der Photodetektor 28 bzw. das Reflektorelement 38 vor äußeren Einflüssen und insbesondere vor Verschmutzung geschützt sind. Um den zweiten oder jeden nachfolgenden Eintritt des Teilstrahls 24 in die Frontscheibe 20 zu optimieren, kann die Frontscheibe zumindest bereichsweise mit einer reflektionsmindernden Oberfläche versehen sein.

### Bezugszeichenliste

- 10: Sende- / Empfangseinheit
- 12: Lichtstrahl
- 14: Auswerteeinheit
- 16: Lichtablenkeinheit
- 18: Rotationsachse
- 20: Frontscheibe
- 22: optisches Element
- 24: Teilstrahl
- 26: Innenseite
- 28: Photodetektor
- 30: Leitung
- 32: Referenzstrahl
- 34: Referenzziel
- 36: reflektierter Referenzstrahl
- 38: Reflektorelement
- 40: reflektierter Teilstrahl
- 42: Außenseite

## Patentansprüche

1. Laserabtastvorrichtung, insbesondere zur Abstandsermittlung,
mit einer Sendeeinheit (10), die einen Impulslaser zum Aussenden eines Lichtstrahls in einen zu überwachenden Bereich aufweist,
mit einer Lichtablenkeinheit (16), um den von dem Impulslaser ausgesandten Lichtstrahl (12) in den zu überwachenden Bereich zu lenken,
mit einer Empfangseinheit (10) zum Empfangen von Lichtimpulsen, die von einem im zu überwachenden Bereich befindlichen Gegenstand reflektiert werden, und
mit einer für den Lichtstrahl (12) durchlässigen Frontscheibe (20), welche die Sende-, Empfangs- und Lichtablenkeinheit (10, 16) von der Umgebung der Laserabtastvorrichtung trennt,
wobei
zumindest ein einen Teilstrahl (24) von dem ausgesandten Lichtstrahl abzweigendes und den Teilstrahl (24) für eine Messung der Transmission der Frontscheibe (20) zu einem Photodetektor (10, 28) lenkendes optisches Element (22) vorgesehen ist, **dadurch gekennzeichnet, dass** das optische Element (22) mit der Frontscheibe (20) gekoppelt ist.

2. Laserabtastvorrichtung nach Anspruch 1,
**dadurch gekennzeichnet,**
**dass** das optische Element (22) ein separates, an der Frontscheibe (20), insbesondere an deren Innenseite (26) befestigtes Bauteil ist.

3. Laserabtastvorrichtung nach Anspruch 1,
**dadurch gekennzeichnet,**
**dass** das optische Element (22) in die Frontscheibe (20) integriert ist.

4. Laserabtastvorrichtung nach einem der vorherigen Ansprüche,
**dadurch gekennzeichnet ,**
**dass** das optische Element (22) ein diffraktiv optisches Element (20) ist.

5. Laserabtastvorrichtung nach einem der vorherigen Ansprüche,
**dadurch gekennzeichnet ,**
**dass** das optische Element (22) ein optisches Gitter (20) ist.

6. Laserabtastvornchtung nach einem der vorherigen Ansprüche,
**dadurch gekennzeichnet,**
**dass** der zumindest eine Photodetektor (28) zur Messung der Intensität des empfangenen Teilstrahls (24) auf der von der Lichtablenkeinheit (16) entgegengesetzten Seite der Frontscheibe (20) gelegen ist.

7. Laserabtastvorrichtung nach einem der Ansprüche 1 bis 5,
**dadurch gekennzeichnet ,**
**dass** der zumindest eine Photodetektor (28) zur Messung der Intensität des empfangenen Teilstrahls (24) und die Lichtablenkeinheit (16) auf der gleichen Seite der Frontscheibe (20) gelegen sind, wobei die Frontscheibe (20) derart ausgebildet ist, dass der Teilstrahl (24) die Frontscheibe (20) wenigstens zweimal durchquert.

8. Laserabtastvorrichtung nach Anspruch 6 oder 7,
**dadurch gekennzeichnet,**
**dass** der Photodetektor (28) oberhalb oder unterhalb der Frontscheibe (20) gelegen ist.

9. Laserabtastvorrichtung nach einem der vorherigen Ansprüche,
**dadurch gekennzeichnet ,**
**dass** zumindest ein Reflektorelement (38) auf der von der Lichtablenkeinheit (16) entgegengesetzten Seite der Frontscheibe (20) gelegen ist.

10. Laserabtastvorrichtung nach einem der Ansprüche 1 bis 8,
**dadurch gekennzeichnet ,**
**dass** zumindest ein Reflektorelement (38) und die Lichtablenkeinheit (16) auf der gleichen Seite der Frontscheibe (20) gelegen sind, wobei die Frontscheibe (20) derart ausgebildet ist, dass der Teilstrahl (24) die Frontscheibe (20) wenigstens zweimal durchquert.

11. Laserabtastvorrichtung nach Anspruch 9 oder 10,
**dadurch gekennzeichnet ,**
**dass** durch das Reflektorelement (38) zumindest ein Teil (40) des Teilstrahls (24) über das optische Element (22) und die Lichtablenkeinheit (16) in die Empfangseinheit (10) reflektierbar ist.

12. Laserabtastvorrichtung nach einem der Ansprüche 9 bis 11,
**dadurch gekennzeichnet ,**
**dass** das Reflektorelement (38) als Referenzziel ausgebildet ist.

13. Laserabtastvorrichtung nach einem der Ansprüche 9 bis 12,
**dadurch gekennzeichnet ,**
**dass** das Reflektorelement (38) oberhalb oder unterhalb der Frontscheibe (20) gelegen ist.

14. Laserabtastvorrichtung nach einem der Ansprüche 9 bis 13,
**dadurch gekennzeichnet,**
**dass** das Reflektorelement (38) durch eine retroreflektierende Folie gebildet ist.

15. Laserabtastvorrichtung nach einem der vorherigen Ansprüche,
**dadurch gekennzeichnet,**
**dass** die Lichtablenkeinheit (16) derart ausgebildet ist, dass ein Referenzstrahl (32) von dem ausgesandten Lichtstrahl (12) abzweigbar und in Richtung eines Referenzziels (34) lenkbar ist.

16. Laserabtastvorrichtung nach Anspruch 15,
**dadurch gekennzeichnet,**
**dass** der Referenzstrahl (32) durch die Lichtablenkeinheit (16) transmittierbar ist.

17. Laserabtastvorrichtung nach Anspruch 15 oder 16,
**dadurch gekennzeichnet,**
**dass** das Referenzziel (34) derart reflektierend und die Lichtablenkeinheit (16) derart lichtdurchlässig ausgebildet ist, dass der Referenzstrahl nach Reflexion am Referenzziel (34) über die Lichtablenkeinheit (16) in die Empfangseinheit (10) einkoppelbar ist.

18. Laserabtastvorrichtung nach einem der Ansprüche 15 bis 17,
**dadurch gekennzeichnet,**
**dass** das Referenzziel (34) durch eine retroreflektierende Folie gebildet ist.

19. Laserabtastvorrichtung nach einem der vorherigen Ansprüche,
**dadurch gekennzeichnet ,**
**dass** die Lichtablenkeinheit (16) einen, insbesondere halbdurchlässigen, Planspiegel umfasst.

20. Laserabtastvorrichtung nach einem der vorherigen Ansprüche,
**dadurch gekennzeichnet,**
**dass** die Lichtablenkeinheit (16) um eine, insbesondere vertikale, Achse rotierbar ist, um mit dem ausgesandten Lichtstrahl (12), insbesondere in einer horizontalen Ebene, einen Winkelbereich von 360° zu überwachen.

21. Laserabtastvorrichtung nach einem der Ansprüche 15 bis 20,
**dadurch gekennzeichnet,**
**dass** der Referenzstrahl (32) durch eine Freischaltanordnung derart steuerbar ist, dass er nur in vorbestimmten Winkelpositionen der Lichtablenkeinheit (16) auf das Referenzziel (34) trifft.

22. Laserabtastvorrichtung nach Anspruch 21,
**dadurch gekennzeichnet,**
**dass** die Freischaltanordnung eine sich mit der Lichtablenkeinheit (16) drehende optische Anordnung ist.

23. Laserabtastvorrichtung nach Anspruch 21,
**dadurch gekennzeichnet ,**
**dass** die Freischaltanordnung eine feststehende und insbesondere mit der Lichtablenkeinheit (16) synchronisierte Blenden- und/oder Verschlussanordnung ist.

24. Laserabtastvorrichtung nach Anspruch 23,
**dadurch gekennzeichnet,**
**dass** die Verschlussanordnung durch Polarisationsfilter oder durch zueinander drehbare Gitter-/Blendenstrukturen gebildet ist.

25. Verfahren zum Überwachen einer Frontscheibe (20) einer Laserabtastvorrichtung, insbesondere nach einem der vorherigen Ansprüche, bei dem durch ein mit einer Frontscheibe (20) gekoppeltes optisches Element (22) ein Teilstrahl (24) von einem durch eine, insbesondere einen Impulslaser aufweisende, Sendeeinheit (10) ausgesandten Lichtstrahl (12) abgezweigt und durch die Frontscheibe (20) gelenkt wird, um die Transmission der Frontscheibe (20) zu bestimmen.

26. Verfahren nach Anspruch 25,
**dadurch gekennzeichnet,**
**dass** die Intensität des durch die Frontscheibe (20) transmittierten Teilstrahls (24) mittels zumindest eines Photodetektors (28) gemessen wird.

27. Verfahren nach Anspruch 25 oder 26,
**dadurch gekennzeichnet,**
**dass** zumindest ein Teil (40) des durch die Frontscheibe (20) transmittierten Teilstrahls (24) mittels eines Reflektorelements (38) durch die Frontscheibe (20) und das optische Element (22) auf eine Empfangseinheit (10) zurückgeworfen wird, in der die Intensität des reflektierten Teilstrahls (40) gemessen wird.

28. Verfahren nach einem der Ansprüche 25 bis 27,
**dadurch gekennzeichnet ,**
**dass** durch eine Lichtablenkeinheit (16) ein Referenzstrahl (32) von dem ausgesandten Lichtstrahl (12) abgezweigt und auf ein Referenzziel (34) gelenkt wird, das den Referenzstrahl (32) zumindest teilweise reflektiert, wobei die Lichtablenkeinheit (16) den reflektierten Referenzstrahl (36) in Richtung einer Empfangseinheit (10) umlenkt, in der die Intensität des reflektierten Referenzstrahls (36) ermittelt wird.

## Claims

1. A laser scanning device, in particular for distance determination having
a transmission unit (10), which has a pulsed laser for the transmission of a light beam into a zone to be monitored;
a light deflection unit (16) to deflect the light beam (12) transmitted by the pulsed laser into the zone to be monitored;
a reception unit (10) for the reception of light pulses which are reflected by an object located in the zone to be monitored; and
a front screen (20) which transmits the light beam (12) and which separates the transmission unit, the reception unit and the light deflection unit (10, 16) from the surroundings of the laser scanning apparatus, wherein
at least one optical element (22) is provided which splits off a part beam (24) from the transmitted light beam and deflects the part beam (24) to a photo-detector (10, 28) for a measurement of the transmittance of the front screen (20), **characterized in that** the optical element (22) is coupled to the front screen (20).

2. A laser scanning apparatus in accordance with claim 1, **characterized in that** the optical element (22) is a separate component which is fastened to the front screen (20), in particular to its inner side (26).

3. A laser scanning apparatus in accordance with claim 1, **characterized in that** the optical element (22) is integrated into the front screen (20).

4. A laser scanning apparatus in accordance with any one of the preceding claims, **characterized in that** the optical element (22) is a diffractive optical element (20).

5. A laser scanning apparatus in accordance with any one of the preceding claims, **characterized in that** the optical element (22) is an optical grid (20).

6. A laser scanning apparatus in accordance with any one of the preceding claims, **characterized in that** the at least one photo-detector (28) for the measurement of the intensity of the received part beam (24) is disposed on the side of the front screen (20) remote from the light deflection unit (16).

7. A laser scanning apparatus in accordance with any one of claims 1 to 5, **characterized in that** the at least one photo-detector (28) for the measurement of the intensity of the received part beam (24) and the light deflection unit (16) are disposed on the same side of the front screen (20), with the front screen (20) being formed such that the part beam (24) passes through the front screen (20) at least twice.

8. A laser scanning apparatus in accordance with claim 6 or claim 7, **characterized in that** the photo-detector (28) is disposed above or beneath the front screen (20).

9. A laser scanning apparatus in accordance with any one of the preceding claims, **characterized in that** at least one reflector element (38) is disposed on the side of the front screen (20) remote from the light deflection unit (16).

10. A laser scanning apparatus in accordance with any one of claims 1 to 8, **characterized in that** at least one reflector element (38) and the light deflection unit (16) are disposed on the same side of the front screen (20), with the front screen (20) being designed such that the part beam (24) passes through the front screen (20) at least twice.

11. A laser scanning apparatus in accordance with claim 9 or claim 10, **characterized in that** at least a part (40) of the part beam (24) can be reflected by the reflector element (38) via the optical element (22) and via the light deflection unit (16) into the reception unit (10).

12. A laser scanning apparatus in accordance with any one of claims 9 to 11, **characterized in that** the reflector element (38) is formed as a reference target.

13. A laser scanning apparatus in accordance with any one of claims 9 to 12, **characterized in that** the reflector element (38) is disposed above or beneath the front screen (20).

14. A laser scanning apparatus in accordance with any one of claims 9 to 13, **characterized in that** the reflector element (38) is formed by a retro-reflecting foil.

15. A laser scanning apparatus in accordance with any one of the preceding claims, **characterized in that** the light deflection unit (16) is made such that a reference beam (32) can be split off from the transmitted light beam (12) and can be deflected in the direction of a reference target (34).

16. A laser scanning apparatus in accordance with claim 15, **characterized in that** the reference beam (32) can be transmitted through the light deflection unit (16).

17. A laser scanning apparatus in accordance with claim 15 or claim 16, **characterized in that** the reference target (34) is made in a reflecting manner and the light deflection unit (16) is made in a light transmitting manner such that the reference beam can be coupled via the light deflection unit (16) into the reception unit (10) after reflection at the reference target (34).

18. A laser scanning apparatus in accordance with any one of claims 15 to 17, **characterized in that** the reference target (34) is formed by a retro-reflecting foil.

19. A laser scanning apparatus in accordance with any one of the preceding claims, **characterized in that** the light deflection unit (16) includes a planar mirror, in particular a semi-permeable planar mirror.

20. A laser scanning apparatus in accordance with any one of the preceding claims, **characterized in that** the light deflection unit (16) is rotatable about an axis, in particular a vertical axis, in order to monitor an angular range of 360° with the transmitted light beam (12), in particular in a horizontal plane.

21. A laser scanning apparatus in accordance with any one of claims 15 to 20, **characterized in that** the reference beam (32) can be controlled by an operative switching arrangement such that it is only incident on the reference target (34) at pre-determined angular positions of the light deflection unit (16).

22. A laser scanning apparatus in accordance with claim 21, **characterized in that** the operative switching arrangement is an optical arrangement rotating with the light deflection unit (16).

23. A laser scanning apparatus in accordance with claim 21, **characterized in that** the operative switching arrangement is a fixed diaphragm and/or shutter arrangement, in particular synchronized with the light deflection unit (16).

24. A laser scanning apparatus in accordance with claim 23, **characterized in that** the shutter arrangement is formed by polarization filters or by grid/diaphragm structures rotatable with respect to one another.

25. A method for the monitoring of a front screen (20) of a laser scanning apparatus, in particular in accordance with any one of the preceding claims, in which a part beam (24) is split off from a light beam (12) transmitted by a transmission unit (10), in particular comprising a pulsed laser, by an optical element (22 coupled to a front screen (20), and is deflected through the front screen (20) to determine the transmittance of the front screen (20).

26. A method in accordance with claim 25, **characterized in that** the intensity of the part beam (24) transmitted through the front screen (20) is measured by means of at least one photo-detector (28).

27. A method in accordance with claim 25 or claim 26, **characterized in that** at least a part (40) of the part beam (24) transmitted through the front screen (20) is reflected back through the front screen (20) and the optical element (22) by means of a reflector element (38) onto a reception unit (10) in which the intensity of the reflected part beam (40) is measured.

28. A method in accordance with any one of claims 25 to 27, **characterized in that** a reference beam (32) is split off from the transmitted light beam (12) by a light deflection unit (16) and is deflected to a reference target (34) which reflects the reference beam (32) at least partly, with the light deflection unit (16) deflecting the reflected reference beam (36) in the direction of a reception unit (10) in which the intensity of the reflected reference beam (36) is determined.

## Revendications

1. Appareil de balayage à laser, en particulier pour la détermination de distances, comprenant
une unité émettrice (10) qui comprend un laser pulsé pour émettre un rayon lumineux dans une zone à surveiller,
une unité de déflexion de lumière (16) pour dévier le rayon lumineux (12) émis par le laser pulsé vers la zone à surveiller ;
une unité réceptrice (10) pour recevoir des impulsions lumineuses qui sont réfléchies par un objet qui se trouve dans la zone à surveiller, et
une plaque frontale (20) transparente pour le rayon lumineux (12), qui sépare l'unité émettrice, l'unité réceptrice et l'unité de réflexion de lumière (10, 16) vis-à-vis de l'environnement du dispositif de balayage à laser,
dans lequel est prévu au moins un élément optique (22) qui dérive un rayon partiel (24) depuis le rayon lumineux émis et amène le rayon partiel (24) à un photodétecteur (10, 28) pour une mesure de la transmission de la plaque frontale (20),
**caractérisé en ce que** l'élément optique (22) est couplé à la plaque frontale (20).

2. Appareil de balayage à laser selon la revendication 1,
**caractérisé en ce que** l'élément optique (22) est un composant séparé fixé sur la plaque frontale (20), en particulier sur sa face intérieure (26).

3. Appareil de balayage à laser selon la revendication 1,
**caractérisé en ce que** l'élément optique (22) est intégré dans la plaque frontale (20).

4. Appareil de balayage à laser selon l'une des revendications précédentes,
**caractérisé en ce que** l'élément optique (22) est un élément optique de diffraction (20).

5. Appareil de balayage à laser selon l'une des revendications précédentes,
**caractérisé en ce que** l'élément optique (22) est un réseau optique (20).

6. Appareil de balayage à laser selon l'une des revendications précédentes,
**caractérisé en ce que** ledit au moins un photodétecteur (28) pour mesurer l'intensité du rayon partiel reçu (24) est agencé du côté de la plaque frontale (20) opposée à l'unité de déflexion de lumière (16).

7. Appareil de balayage à laser selon l'une des revendications précédentes,
**caractérisé en ce que** ledit au moins un photodétecteur (28) pour mesurer l'intensité du rayon partiel reçu (24) et l'unité de déflexion de lumière (16) sont agencés du même côté de la plaque frontale (20), ladite plaque frontale (20) étant ainsi réalisée que le rayon partiel (24) traverse au moins deux fois la plaque frontale (20).

8. Appareil de balayage à laser selon la revendication 6 ou 7,
**caractérisé en ce que** le photodétecteur (28) est situé au-dessus ou au-dessous de la plaque frontale (20).

9. Appareil de balayage à laser selon l'une des revendications précédentes,
**caractérisé en ce qu'**au moins un élément réflecteur (38) est disposé sur le côté de la plaque frontale (20) opposé à l'unité de déflexion de lumière (16).

10. Appareil de balayage à laser selon l'une des revendications 1 à 8,
**caractérisé en ce qu'**au moins un élément réflecteur (38) et l'unité de déflexion de lumière (16) sont disposés sur le même côté de la plaque frontale (20), ladite plaque frontale (20) étant ainsi réalisée que le rayon partiel (24) traverse au moins deux fois la plaque frontale (20).

11. Appareil de balayage à laser selon la revendication 9 ou 10,
**caractérisé en ce que** grâce à l'élément réflecteur (38) au moins une partie (40) du rayon partiel (24) peut être réfléchie vers l'unité réceptrice (10) via l'élément optique (22) et l'unité de déflexion de lumière (16).

12. Appareil de balayage à laser selon l'une des revendications 9 à 11,
**caractérisé en ce que** l'élément réflecteur (38) est réalisé sous forme de cible de référence.

13. Appareil de balayage à laser selon l'une des revendications 9 à 12,
**caractérisé en ce que** l'élément réflecteur (38) est disposé au-dessus ou au-dessous de la plaque frontale (20).

14. Appareil de balayage à laser selon l'une des revendications 9 à 13,
**caractérisé en ce que** l'élément réflecteur (38) est formé par un film rétroréflecteur.

15. Appareil de balayage à laser selon l'une des revendications précédentes,
**caractérisé en ce que** l'unité de déflexion de lumière est réalisée de telle manière qu'un rayon de référence (32) peut être dérivé depuis le rayon lumineux émis (12) et amené en direction d'une cible de référence (34).

16. Appareil de balayage à laser selon la revendication 15,
**caractérisé en ce que** le rayon de référence (32) est susceptible d'être transmis au moyen de l'unité de déflexion de lumière (16).

17. Appareil de balayage à laser selon la revendication 15 ou 16,
**caractérisé en ce que** la cible de référence (34) est réalisée de façon réfléchissante et l'unité de déflexion de lumière (16) est réalisée de façon transparente, de telle manière que le rayon de référence est susceptible d'être couplé dans l'unité réceptrice (10) via l'unité de déflexion de lumière (16) après réflexion sur la cible de référence (34)

18. Appareil de balayage à laser selon l'une des revendications 15 à 17,
**caractérisé en ce que** la cible de référence (34) est formée par un film rétroréflecteur.

19. Appareil de balayage à laser selon l'une des revendications précédentes,
**caractérisé en ce que** l'unité de déflexion de lumière (16) comprend un miroir plan, en particulier semi-transparent.

20. Appareil de balayage à laser selon l'une des revendications précédentes,
**caractérisé en ce que** l'unité de déflexion de lumière (16) est en rotation autour d'un axe, en particulier vertical, afin de surveiller avec le rayon lumineux émis (12), en particulier dans un plan horizontal, une plage angulaire de 360°.

21. Appareil de balayage à laser selon l'une des revendications 15 à 20,
**caractérisé en ce que** le rayon de référence (32) est susceptible d'être commandé au moyen d'un agencement commutateur, de telle manière qu'il ne tombe sur la cible de référence (34) que dans des positions angulaires prédéterminées de l'unité de déflexion de lumière (16).

22. Appareil de balayage à laser selon la revendication 21,
**caractérisé en ce que** l'agencement commutateur est un agencement optique qui tourne avec l'unité de déflexion de lumière (16).

23. Appareil de balayage à laser selon la revendication 21,
**caractérisé en ce que** l'agencement commutateur est un agencement à diaphragme et/ou obturateur stationnaire et en particulier synchronisé avec l'unité de déflexion de lumière (16).

24. Appareil de balayage à laser selon la revendication 23,
**caractérisé en ce que** l'agencement à obturateur est formé par des filtres à polarisation ou par des structures à réseau/diaphragme en rotation les unes par rapport aux autres.

25. Procédé pour surveiller une plaque frontale (20) d'un appareil de balayage à laser, en particulier selon l'une des revendications précédentes, dans lequel un rayon partiel (24) est dérivé, au moyen d'un élément optique (22) couplé avec une plaque frontale (20), depuis un rayon lumineux (12) émis par une unité émettrice (10) qui présente en particulier un laser pulsé, et est amené à travers la plaque frontale (20) afin de déterminer la transmission de la plaque frontale (20).

26. Procédé selon la revendication 25,
**caractérisé en ce que** l'intensité du rayon partiel (24) transmis à travers la plaque frontale (20) est mesurée au moyen d'au moins un photodétecteur (28).

27. Procédé selon la revendication 25 ou 26,
**caractérisé en ce qu'**une partie au moins (40) du rayon partiel (24) transmis à travers la plaque frontale (20) est renvoyé au moyen d'un élément réflecteur (38) à travers la plaque frontale (20) et l'élément optique (22) vers une unité réceptrice (10) dans laquelle est mesurée l'intensité du rayon partiel réfléchi (20).

28. Procédé selon l'une des revendications 25 à 27,
**caractérisé en ce qu'**un rayon de référence (32) est dérivé à travers une unité de déflexion de lumière (16), depuis le rayon lumineux émis (12) et mené vers une cible de référence (34) qui réfléchit au moins partiellement le rayon de référence (32), et **en ce que** l'unité de déflexion de lumière (16) défléchit le rayon de référence réfléchi (36) en direction de l'unité réceptrice (10) dans laquelle l'intensité du rayon de référence réfléchie (36) est déterminée.
